# NEUE EUROPÄISCHE PATENTSCHRIFT

(11) **EP 2 909 402 B2**
(45) Veröffentlichungstag und Bekanntmachung des Hinweises auf die Entscheidung über den Einspruch: **15.12.2021**
(45) Hinweis auf die Patenterteilung: 19.12.2018
(21) Anmeldenummer: 13783014.7
(22) Anmeldetag: 17.10.2013
(51) Int. Cl.: E05B 47/06, E05B 1/00, E05B 63/16, E05B 63/00, E05B 47/00, E05B 41/00, E05B 17/10

(54) **SYSTEM ZUR BETÄTIGUNG EINES SCHLOSSES**
SYSTEM FOR LOCK ACTUATION
SYSTÈME D'ACTIONNEMENT D'UNE SERRURE

(30) Priorität: 17.10.2012 DE 102012020451; 17.10.2012 DE 102012020450
(43) Veröffentlichungstag der Anmeldung: 26.08.2015
(73) Patentinhaber: dormakaba Deutschland GmbH, 58256 Ennepetal (DE)
(72) Erfinder: LORENZ, Leo, 85456 Wartenberg (DE); SCHWEITZER, Falko, 58332 Schwelm (DE)
(74) Vertreter: Balder IP Law, S.L.
(86) Internationale Anmeldenummer: PCT/EP2013/071778
(87) Internationale Veröffentlichungsnummer: WO 2014/060547

(56) Entgegenhaltungen:
- EP-A1- 0 709 534
- EP-A2- 1 580 354
- EP-A2- 1 903 168
- EP-A2- 2 323 106
- WO-A1-96/23120
- AT-U1- 7 368
- DE-A1-102006 024 247
- DE-A1-102006 027 829
- DE-A1-102008 020 726
- DE-U1- 9 013 254
- US-A- 4 073 527
- US-A- 5 018 375
- US-A1- 2012 044 114

## Beschreibung

Es geht um einen Beschlag für eine Tür.

Die Erfindung betrifft ein System zur Betätigung eines Schlosses gemäß Anspruch 1. Das System umfasst einen Funktionsträger, insbesondere einen Rahmen, ein Türbetätigungsteil, insbesondere einen Türgriff, ein mit dem Funktionsträger drehfest verbundenes Lagerelement, das zur Lagerung des Türbetätigungsteils an dem Funktionsträger dient, und eine Kupplung, die zumindest ein Kupplungselement umfasst, welches aus einer Außerkontaktstellung in eine Kontaktstellung mit einem Kupplungsgegenelement bewegbar ist, wobei in der Außerkontaktstellung des Kupplungselements mit dem Kupplungsgegenelement das Türbetätigungsteil ohne Übertragung eines Drehmoments auf das Schloss frei drehbar ist, und wobei in Kontaktstellung des Kupplungselementes mit dem Kupplungsgegenelement ein an dem Türbetätigungsteil anliegendes Drehmoment über das Kupplungselement auf das Kupplungsgegenelement und darüber auf das Schloss übertragbar ist, wobei das Kupplungselement zumindest in der Außerkontaktstellung in dem Lagerelement integriert ist.

Systeme, die ein an einem Funktionsträger angeordnetes Türbetätigungsteil umfassen, sind an sich bekannt, z. B. aus DE 9013254U. In üblicher Weise hat der Funktionsträger bei den bekannten Systemen die Aufgabe, elektronische Komponenten aufzunehmen, wie beispielsweise ein Kartenlesegerät oder eine Elektronik, die mit einer Antenne gekoppelt ist, zur Erkennung eines von einem Chip oder einer Karte ausgesendeten Authentifizierungscodes. Teilweise werden die Authentifizierungskomponenten auch außerhalb des Funktionsträgers auf eine den Funktionsträger abdeckende Frontblende gesetzt.

Die Authentifizierung dient dazu, das Schloss zu entriegeln und dadurch die Tür zu öffnen. Die Entriegelung des Schlosses erfolgt dadurch, dass das Türbetätigungsteil mit Funktionselementen des Schlosses gekoppel twird, die auf einen Schließzylinder des Schlosses oder auf eine Nuss des Schlosses wirken. Solche Türen, die nur über eine Authentifizierung passierbar sind, werden beispielsweise in Hotels, Büroräumen oder andere nur durch berechtigte Personen betretbare Räumlichkeiten verwendet.

Ganz allgemein werden als Türbetätigungsteil im Sinne der Anmeldung bevorzugt Türgriffe, aber auch Türknaufe oder elektro(mecha)nische Drehknäufe verstanden, über die bei manueller Betätigung eine Tür entriegelt oder geöffnet werden kann.

Wie bereits beschrieben, werden elektro(mecha)nische Türgriffe oder auch Drehknäufe insbesondere dazu genutzt, um ein Schloss von einer Türseite erst nach vorheriger Authentifizierung beispielsweise mittels eines Chips oder einer Ausweiskarte zu entriegeln. Ohne eine derartige Authentifizierung ist der elektro(mecha)nische Türgriff oder Drehknauf, d. h. im Sinne der Anmeldung das Türbetätigungsteil, von der dazugehörenden in dem Schloss angeordneten Nuss entkuppelt. Eine Drehbewegung des Türgriffs oder des Drehknaufs führt daher nicht zu einer Drehung der Nuss, und daher nicht zu einer Drehung der Nuss im Inneren des Schlosses. Da sich die Nuss im Entkupplungsfall nicht mit dem Türgriff oder Drehknauf mitdreht, wird das Schloss nicht entriegelt und somit kann die Tür nicht geöffnet werden.

Die bekannten Systeme zur Betätigung eines Schlosses haben den Nachteil, dass durch die Lagerung des Türbetätigungsteils an dem Funktionsträger und insbesondere die Anordnung der Kupplung und der Authentifizierungselemente, wie beispielsweise Kartenleser, Ziffernblock oder andere elektronische Komponenten, dazu führen, dass die Systeme, insbesondere die Funktionsträger, die zusammen mit einer Abdeckung den Beschlag der bekannten Systeme bilden, eine massive Aufbauhöhe, gesehen von der Auflage des Beschlages an dem Türblatt, haben. Aufgrund der Aufbauhöhe der bekannten Systeme, insbesondere der bekannten Beschläge, ist es daher beispielsweise nicht möglich, die Systeme so in einem Türblatt zu verbauen, dass deren Oberfläche plan mit der Oberfläche des Türblatts abschließt. Zudem ist die Einsatzmöglichkeit der bekannten Systeme aufgrund deren Bauhöhe stark eingegrenzt. So ist es beispielsweise nicht möglich, die bekannten Systeme beispielsweise an einer Rohrrahmentür im Inneren einer Zarge anzubringen, da durch Anschlagen der Systeme an die Türzarge das Öffnen der Tür gehindert wäre. Aufgabe der Erfindung ist es daher, die aus dem Stand der Technik bekannten Nachteile zu überwinden. Insbesondere ist es die Aufgabe der vorliegenden Erfindung, die Bauhöhe der bekannten Systeme zu reduzieren und dadurch deren Einsatzmöglichkeit zu erhöhen.

Diese Aufgabe wird von einem System gemäß den Merkmalen des Anspruchs 1 gelöst.

Das erfindungsgemäße System zur Betätigung eines Schlosses, welches einen Funktionsträger, insbesondere einen Rahmen, ein Türbetätigungsteil, insbesondere einen Türgriff, einen mit dem Funktionsträger drehfest verbundenes Lagerelement, das zur Lagerung des Türbetätigungsteils an dem Funktionsträger dient und eine Kupplung umfasst, die zumindest ein Kupplungselement aufweist, welches aus einer Außerkontaktstellung in eine Kontaktstellung mit einem Kupplungsgegenelements bewegbar ist, wobei in der Außerkontaktstellung des Kupplungselements mit dem Kupplungsgegenelement das Türbetätigungsteil ohne Übertragung eines Drehmoments auf das Schloss frei drehbar ist, und wobei in Kontaktstellung des Kupplungselementes mit dem Kupplungsgegenelement ein an dem Türbetätigungsteil anliegendes Drehmoment über das Kupplungselement auf das Kupplungsgegenelement und darüber auf das Schloss übertragbar ist, ist erfindungsgemäß so ausgestaltet, dass das Kupplungselement zumindest in der Außerkontaktstellung mit dem Kupplungsgegenelement in dem Lagerelement integriert ist, wobei in dem Funktionsträger Funktionsbereiche ausgebildet sind und zumindest in einem Funktionsbereich des Funktionsträgers, in dem zumindest eine Antenne angeordnet ist, der Funktionsträger in seiner als umlaufender Rahmen ausgestalteten Außenkontur unterbrochen ist.

Im Sinne der Anmeldung wird integriert so verstanden, dass das Kupplungselement vollintegriert in dem Lagerelement aufgenommen ist.

Diese Lösung bietet den Vorteil, dass das erfindungsgemäße System zum einen an sämtliche Schlösser anschließbar ist, die ein dem Kupplungselement entsprechendes Kupplungsgegenelement aufweisen. Zudem bietet das erfindungsgemäße System den Vorteil, dass durch die Integration des Kupplungselementes in das Lagerelement, wobei das Lagerelement in das Türbetätigungsteil eingreift, der Aufbau des erfindungsgemäßen Systems, nämlich dessen Bauhöhe auf ein Minimum reduziert ist.

Erfindungsgemäß ist der Funktionsträger so ausgestaltet, dass dieser in unterschiedliche Funktionsbereiche unterteilt ist. So kann beispielsweise ein Funktionsbereich dahingehend ausgebildet sein, dass dieser die Elektronik beispielsweise ein CPU Board mit darauf aufgesetzter RFID Antenne aufnimmt. Dabei ist vorzugsweise auch die Lichtschranke, bzw. die beiden Lichtschranken, die durch IR LEDs und Fototransistoren gebildet werden, an dem CPU Board, nämlich an dessen Platine bestückbar. Um Übertragungen von elektronischen Signalen, beispielsweise von einer Authentifizierungskarte oder einem Chip nicht durch eine geschlossene Ausbildung des Rahmens des Funktionsträgers, der aus einem Metall bzw. Metallguss hergestellt ist, zu unterbinden, wird der Rahmen in dem Funktionsbereich, der die Elektronik und die Antenne aufnimmt, durch einen Schnitt unterbrochen, d. h. die Außenkontur des Rahmens in ihrem Umlauf unterbrochen. So kann sichergestellt werden, dass der Rahmen in diesem Funktionsbereich nicht als faradayscher Käfig oder als Spule wirkt, welche eine Signalübertragung von einer Authentifizierungskarte oder einem Chip auf die Elektronik verhindern würden.

In vorteilhafter Weise ist das Kupplungselement als ein Kupplungsstift ausgestaltet, der ein Vierkant ist. Natürlich kann das Kupplungselement auch als ein Kupplungsstift mit anderen Formen wie beispielsweise als ein Sechskant oder als ein Torx ausgestaltet sein.

Bevorzugt weist das Kupplungsgegenelement, welches beispielsweise eine Nuss ist, die zur Drehmoment Übertragung des Türgriffes auf das Schloss dient, eine Kontur auf, in die das Kupplungselement kraft- und/oder formschlüssig eingreift. Der Eingriff des Kupplungselements in das Kupplungsgegenelement erfolgt in bevorzugter Weise nach Authentifizierung durch eine berechtigte Person an dem System, so dass eine Kontaktstellung des Kupplungselementes mit dem Kupplungsgegenelement erfolgt, wobei das Kupplungselement zumindest abschnittsweise drehfest, hier bevorzugt in die Innenkontur des Kupplungsgegenelementes greift. Vorzugsweise weist dazu das Kupplungsgegenelement eine Innenkontur auf, beispielsweise in Form eines Vierkantausschnittes oder einer Vierkantbohrung, wobei die Anlageflächen für das Kupplungselement konvex ausgestaltet sind. Durch diese konvexe Ausgestaltung kann ein Fluchtungsfehler des Schlosses mit der darin angeordneten Nuss in dem Türblatt in Bezug auf das Türbetätigungsteil und insbesondere auf das Kupplungselement zumindest teilweise ausgeglichen werden.

Vorzugsweise wird das Kupplungselement, welches beispielsweise ein Kupplungsstift ist, von einem Antriebselement angetrieben, d.h. in die Außerkontaktstellung und in die Kontaktstellung mit dem Kupplungsgegenelement bewegt.

Bei dem Antriebselement handelt es sich bevorzugt um einen Motor mit einer darauf aufgesetzten Spindel. Dabei greift die Spindel des Motors in ein im Kupplungselement ausgebildetes Innengewinde, wodurch das Kupplungselement an der Spindel des Motors linear bewegbar ist, d. h. in Richtung des Kupplungsgegenelementes oder entgegen dieser Richtung bewegbar ist.

Damit das Kupplungselement nicht der Drehbewegung des Motors, die über die Spindel auf das Kupplungselement übertragen wird, folgt, wird das Kupplungselement bevorzugt in einem Führungselement geführt, das eine Bohrung aufweist, die der Kontur, d. h. der Außenkontur des Kupplungselementes entspricht. Da das Kupplungselement vorzugsweise als Vierkant ausgebildet ist, ist auch die Bohrung in dem Führungselement, die zur Führung des Kupplungselements führt, als Vierkantbohrung ausgeführt.

Bei dem Führungselement handelt es sich bevorzugt um eine Führungshülse, die neben dem Kupplungselement auch das Antriebselement, nämlich den Motor mit der daran ausgebildeten Spindel aufnimmt. Dabei ist der Motor bevorzugt in einer Motortasche gelagert, die in das Führungselement, hier vorzugsweise in die Führungshülse einführbar ist.

Vorzugsweise erfüllt das Führungselement, welches hier bevorzugt als Führungshülse ausgestaltet ist, noch eine weitere elementare Funktion, die der Sicherung des Türbetätigungsteils an dem Lagerelement dient. Um diese Funktion des Führungselementes genauer erklären zu können, muss zuvor die bevorzugte Lagerung des Türbetätigungsteils, hier insbesondere des Türgriffs an dem Lagerelement verstanden werden.

Das Lagerelement, welches bevorzugt als Buchse ausgebildet ist, ist drehfest mit dem Funktionsträger verbunden. Vorzugsweise ist dabei das Lagerelement an der dem Türbetätigungsteil abgewandten Seite des Funktionsträgers durch eine Bohrung des Funktionsträgers geschoben, und wird mittels Befestigungen drehfest mit dem Funktionsträger verbunden. Natürlich ist es auch denkbar, das Lagerelement einstückig mit dem Funktionsträger auszubilden.

An dem dem Türbetätigungsteil zugewandten Ende, weist das Lagerelement bevorzugt Sicherungselemente, beispielsweise in Form von Rastnasen oder -zungen auf, die entweder in Ausnehmungen, beispielsweise ringförmigen Nuten, die in der Innenwandung des Türbetätigungsteils ausgestaltet sind, beim Aufschieben des Türbetätigungsteils in Eingriff gelangen oder aber in das Türbetätigungsteil ist eine Presshülse, vorzugsweise eine zweiteilige Presshülse eingeschoben, wobei die beiden Teile der Presshülse so beabstandet zueinander in das Türbetätigungsteil eingepresst sind, dass die durch den Abstand zwischen den beiden Teilen der Presshülse gebildete Ringnut zum Eingriff der Sicherungselement des Lagerelementes dienen.

Ist das Türbetätigungsteil durch die Sicherungselemente gesichert, insbesondere mit den Rastnasen oder -zungen des Lagerelementes verrastet, muss sichergestellt werden, dass beispielsweise Rastnasen oder-zungen nichtaus ihrer Verrastungsposition aus beispielsweise den Ringnuten ausgreifen. Um dies zu verhindern, wird Sicherung durch die Sicherungselement, beispielsweise nach Verrasten des Türbetätigungsteils mit dem Lagerungselement das Führungselement mit dem darin angeordneten Antriebselement und dem mit dem Antriebselement verbundenen Kupplungselement an der dem Türgriff abgewandten Seite des Funktionsträgers in das Lagerelement eingeführt. Durch das Einführen bzw. das Einschieben des Führungselementes in das Lagerelement kann somit verhindert werden, dass beispielsweise die Rastelemente aus den Ausnehmungen, hier besonders bevorzugt aus den Ringnuten wieder herausspringen bzw. herausgreifen. Durch diese Funktion des Führungselementes kann sichergestellt werden, dass das Türbetätigungsteil, hier insbesondere der Türgriff nach Einführung des Führungselementes in das Lagerelement nicht ohne Gewalt anzuwenden wieder von dem Lagerelement abziehbar ist.

Da die Lagerung des Türbetätigungsteils, hier insbesondere des Türgriffs an dem Lagerelement drehfrei ist, d. h. das Türbetätigungsteil um die durch das Lagerelement gebildete Achse drehbar ist und das Lagerelement das Führungselement drehfrei um dessen Achse aufnimmt, muss zur Übertragung eines Drehmoments vom Türbetätigungsteil auf das Kupplungsgegenelement nicht nur das Kupplungselement in das Kupplungsgegenelement greifen, sondern es muss auch eine Drehmomentübertragung von dem Türbetätigungsteil auf das Führungselement erfolgen. Um dies gewährleisten zu können, ist das Türbetätigungsteil vorzugsweise als Gabelschlüssel ausgebildet, beispielsweise in Form eines Vierkants, in den das dem Kupplungsgegenelement abgewandte Ende des Führungselements kraft- und/oder formschlüssig greift. Dazu ist das dem Kupplungsgegenelement abgewandte Ende des Kupplungselementes vorzugsweise der Kontur des Gabelschlüssels ausgestaltet, hier vorzugsweise als Vierkant ausgestaltet.

Besonders bevorzugt ist zumindest ein Teil der Presshülse als Gabelschlüssel ausgebildet, durch welchen die Drehmomentübertragung von dem Türbetätigungsteil auf das Führungselement erfolgt.

Dadurch, dass das Führungselement mit seinem dem Kupplungsgegenelement abgewandten Ende zumindest abschnittsweise drehfest mit dem Türbetätigungsteil kraft- und/oder formschlüssig verbunden ist, kann bei einer Authentifizierung an dem System, die zu einer Kontaktstellung des Kupplungselementes mit dem Kupplungsgegenelement führt, der in dem Führungselement in einer Motortasche angeordnete Motor angesteuert werden, der dann in Drehbewegung versetzt über die Spindel das Kupplungselement in dem Führungselement in Richtung des Kupplungsgegenelementes antreibt, wodurch dann durch Betätigung des Türbetätigungsteils in der Kontaktstellung das Drehmoment durch drehfeste Lagerung des Führungselementes auf das Kupplungsgegenelement übertragen wird.

Zur Energieversorgung des Systems, insbesondere zur Energieversorgung des Motors ist in dem Türbetätigungsteil bevorzugt eine Batterie angeordnet. Dazu weist das Türbetätigungsteil vorzugsweise ein Batteriefach auf, welches beispielsweise in Form eines Batteriefaches einer Taschenlampe ausgestaltet ist. Diese Ausgestaltung bietet sich insbesondere an, da, wie auch bei Batteriefächern einer Taschenlampe, das Batteriefach mit einem Gehäusedeckel, der in das Batteriefach geschraubt wird, abgeschlossen wird. Dabei bildet der Gehäusedeckel einen Pol zur Anlage der Batterie. Zudem eignet sich diese Ausgestaltung auch dazu, dass das Wechseln der Batterie erleichtert wird. Da nämlich der Gehäusedeckel des Batteriefachs abschraubbar ist, kann das "Auswerfen" der Batterie dadurch erleichtert werden, dass bei abgeschraubten Deckel das Türbetätigungsteil, hier insbesondere der Türgriff gedreht wird, bis die Batterie selbsttätig aus dem Batteriefach herausfällt.

Zur Positionsüberwachung der Kupplung, genauer gesagt zur Positionsüberwachung des Kupplungselementes, dient vorzugsweise ein Sensor. Über den Sensor können bevorzugt die Kupplungszustände ausgekuppelt, d. h. Außerkontaktstellung des Kupplungselementes mit dem Kupplungsgegenelement, eingekuppelt, d. h. in Kontaktstellung des Kupplungselementes mit dem Kupplungsgegenelement und eine Zwischenstellung, die zwischen der Außerkontaktstellung und Kontaktstellung des Kupplungselementes mit dem Kupplungsgegenelement liegt, erfasst werden.

In bevorzugter Weise eignet sich als Sensor, der die Stellung des Kupplungselementes, d. h. den Kupplungszustand erfasst, ein optoelektronischer Sensor in Form zumindest einer Lichtschranke. Dabei umfasst die Lichtschranke bevorzugt ein Infrarot-LED (IR LED) und einen Fototransistor, der in einem Abstand gegenüber der IR LED platziert ist. Dabei werden die Bauteile der Lichtschranke, nämlich die IR LED und der Fototransistor vorzugsweise auf eine Platine, beispielsweise ein CPU Board, bestückt, welches bevorzugt innerhalb des Funktionsträgers in einem Funktionsbereich gelagert ist. Vorzugsweise ist beidseitig der Platine, d. h. auf beiden Flächen der Platine jeweils eine Lichtschranke auf die Platine bestückt. Dabei wirkt die Platine in vorteilhafterweise als Schattenelement, um eine Kreuzreaktion, d. h. ein Auftreffen des Infrarotstrahles der einen Lichtschranke auf den Fototransistor der anderen Lichtschranke zu verhindern.

Da das Kupplungselement in dem Führungselement geführt wird, muss zum Durchleiten eines Lichtstrahles von den IR LEDs auf die Fototransistoren der jeweiligen Lichtschranken in dem Führungselement zumindest eine durchgängige Bohrung vorgesehen sein, die ein Durchleiten des Lichtstrahles erlaubt. Wird nun durch das Antriebselement das Kupplungselement in Richtung Kupplungsgegenelement oder entgegengesetzt zu dieser Richtung bewegt, kann die Position des Kupplungselementes in dem Führungselement erfasst werden. Vorzugsweise weist dazu das Kupplungselement einen soliden Bereich auf, der ein Durchtritt der Lichtstrahlen verhindert, in den oder dem ein Bereich im Kupplungselement ausgestaltet ist, der den Durchgang der Lichtstrahlen durch die Bohrungen des Führungselementes erlaubt. Dieser Bereich kann beispielsweise als Langloch oder als eine Ausnehmung bzw. Aussparung in dem Kupplungselement ausgestaltet sein.

Vorzugsweise weist der Funktionsträger, der hier bevorzugt als Rahmen ausgestaltet ist, keine Ecken auf. D. h. dass der Funktionsträger, der als Rahmen ausgebildet ist, der Außenkontur des Rahmens folgend, zumindest abschnittsweise abgerundet ist. Dadurch wird eine Verletzungsgefahr bei Betätigung des Systems, hier insbesondere des Türbetätigungsteils verringert. Zudem entspricht diese Formgebung des Funktionsträgers den heutigen Designstandards, beispielsweise den für Smartphones, so dass das System den aktuell gültigen Designtrends angepasst ist.

Vorzugsweise ist der Funktionsträger in einem Zinkgussverfahren herstellbar, wobei Zinkguss den Vorteil hat, dass kleinste Strukturen oder auch Aussparungen, die Funktionsbereiche innerhalb des Funktionsträgers darstellen, ausgestaltet werden können. Bei einteiliger Ausführung des Funktionsträgers mit dem Lagerelement ist natürlich auch das Lagerelement im Zinkgussverfahren an dem Funktionsträger darstellbar.

Um die Funktionsbereiche des Funktionsträgers, insbesondere die in diesen Funktionsbereichen angeordneten Funktionselemente des Systems vor einem Zugriff zu sichern, ist der Funktionsträger bevorzugt durch ein Abdeckelement, beispielsweise eine eine Abdeckung, hier insbesondere in Form einer Frontblende verschließ- bzw. abdeckbar. Um die Abdeckung bzw. die Frontblende auf den Funktionsträger aufsetzen zu können, weist die Frontblende bzw. die Abdeckung im Bereich des Lagerelements eine Bohrung auf, durch die das Lagerelement durchführbar ist. Die Sicherung der Abdeckung auf dem Funktionsträger erfolgt zum einen über Befestigungselemente, die zwischen dem Funktionsträger und dem Abdeckelement wirken, wie beispielsweise Clips. Zum anderen wird der Sitz der Abdeckung, bzw. der Frontblende auf dem Funktionsträger dadurch gesichert, dass das Türbetätigungsteil, hier insbesondere der Türgriff, auf dem Lagerelement auf der dem Türgriff zugewandten Fläche der Frontblende, bzw. der Abdeckung zur Anlage gelangt. Entsprechend wird durch die Sicherung des Türbetätigungsteils an dem Lagerelement auch die Frontblende bzw. die Abdeckung, also das Abdeckelement in seiner Anlage auf den Funktionsträger gesichert.

Damit das Abdeckelement nicht über den als Rahmen ausgestatteten Funktionsträger hinausragt, ist dieses der Außenkontur des Funktionsträgers angepasst. Zudem ist vorzugsweise zur Erklärung der Betätigung des Systems die Unterteilung der Funktionsbereiche durch das Abdeckelement visualisiert. Bevorzugt werden hierzu unterschiedliche Materialien verwendet, wie beispielsweise im Bereich der Elektronik und der Antenne Glas oder Plexiglas, wobei sich dieser Funktionsbereich von einem weiteren Funktionsbereich dadurch abgrenzt, dass der weitere Funktionsbereich beispielsweise in Form einer Metalloptik oder als Metall ausgestaltet ist. Vorzugsweise sind die Funktionsbereiche nicht nur durch unterschiedliche Materialeigenschaften des Abdeckelementes bzw. der Frontblende visualisiert, sondern auch durch unterschiedliche Farbgebung.

Um die Funktionsbereiche außerhalb der unterschiedlichen Materialeigenschaften und der unterschiedlichen Farben in dem Abdeckelement unterscheiden bzw. unterteilen zu können, ist vorzugsweise zwischen den Funktionsbereichen ein Lichtleiterelement in dem Abdeckelement bzw. der Frontblende ausgestaltet, welches die Funktionsbereiche visuell in dem Abdeckelement bzw. der Frontblende voneinander trennt. Dabei ist das Lichtleiterelement vorzugsweise im Bereich des Lagerelements, d. h. um die Anlage des Türbetätigungsteils an dem Abdeckelement herum ausgestaltet. Natürlich kann das Lichtleiterelement auch unabhängig, das heißt als ein nicht mit dem Abdeckelement verbundenes Bauteil ausgestaltet sein, welches beispielsweise eine zweiteilige Frontblende miteinander verbindet und dadurch die durch die beiden Teile der Frontblende visualisierten Funktionsbereiche voneinander trennt.

Das Lichtleiterelement dient natürlich nicht nur zur visuellen Trennung der Funktionsbereiche in der Abdeckung bzw. Frontblende, sondern dient bevorzugt zur optischen Signalgebung der Funktionsstellung des Türbetätigungsteils. So könnte beispielsweise das Lichtleiterelement ein grünes Signal aussenden, welches beispielsweise die erfolgreiche Authentifizierung an dem System anzeigt. Wird aber beispielsweise ein rotes Signal von dem Lichtleiterelement abgegeben, könnte dieses eine Nichtberechtigung zur Betätigung des Systems anzeigen, wobei dann beispielsweise eine Tür nicht geöffnet werden könnte.

Da das Kupplungselement in dem Lagerelement integriert ist, ist natürlich auch das Kupplungselement zumindest in der Außerkontaktstellung zumindest abschnittsweise in dem Türbetätigungsteil und natürlich auch in dem Führungselement integriert. Diese Anordnung des Kupplungselementes nämlich in das Führungselement, das in das Lagerelement einführbar ist, wobei das Türbetätigungselement auf dem Lagerelement zur Lagerung gelangt, führt zu einer äußerst geringen Bauhöhe des Funktionsträgers. Insgesamt kann dadurch zusammen mit dem Abdeckelement, das insbesondere als Frontblende auf den Funktionsträger gesetzt wird, bzw. zur Anlage gelangt, insgesamt eine Bauhöhe des Funktionsträgers mit dem Abdeckelement, die zusammen den Beschlag des Systems bilden, von 10 mm oder weniger eingehalten werden.

Bei Auflage des Systems, genauer gesagt bei Auflage des Funktionsträgers auf die Fläche eines Türblattes ist als Bauhöhe des Systems die Tiefe zu verstehen. Dabei wird die Tiefe des Systems von der um Türbetätigungsteil zugewandten Fläche des Abdeckelementes bis zu der Fläche des Türblattes gemessen auf die der Funktionsträger anliegt.

Aufgrund der geringen Bauhöhe ist es mit dem erfindungsgemäßen System erstmalig möglich, dieses in eine Fräsung eines Türblattes einzulassen. Zudem kann das erfindungsgemäße System aufgrund seiner geringen Bauhöhe auch in Rohrrahmentüren innerhalb einer Zarge, an der die Tür anliegt, verbaut werden.

Weitere die Erfindung verbessernde Maßnahmen werden nachstehend mit der Beschreibung eines bevorzugten Ausführungsbeispiels der Erfindung anhand der Figuren näher dargestellt. Es zeigen:
- Fig. 1: ein erfindungsgemäßes System in einer Seitenansicht entlang der Achse A-A in einer Schnittdarstellung,
- Fig. 2: das System aus Fig. 1 in einem Schnitt, der eine Ebene tiefer liegt, als der in Fig. 1, in einer Unteransicht um 90° gedreht um die Achse A-A, und somit frontal schauend auf die Achse B-B aus Fig. 1,
- Fig. 3: das System aus den vorherigen Figuren in einer Frontalansicht auf die Achse zur Drehmomentübertragung A-A.

In den unterschiedlichen Figuren sind gleiche Teile stets mit denselben Bezugszeichen versehen, weshalb diese in der Regel auch nur einmal beschrieben werden.

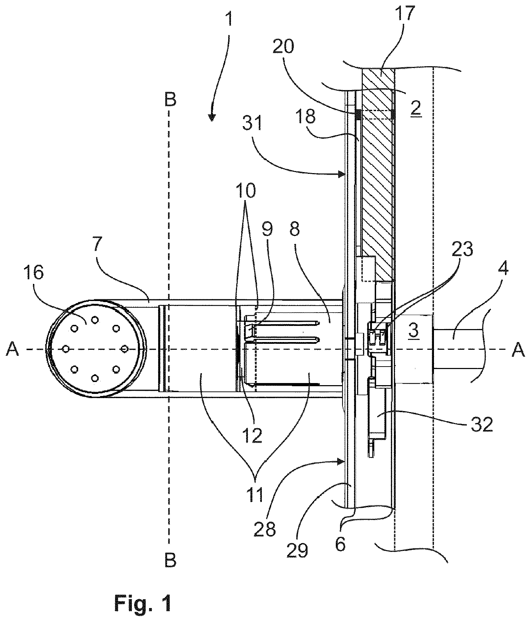

Figur 1 zeigt ein System 1 zur Betätigung eines Schlosses 2, welches hier der Orientierung halber nur in Form einer gestrichelten Linie dargestellt ist. Als Funktionselement des Schlosses 2 ist in den Figuren lediglich ein Kupplungsgegenelement 3 in Form einer Nuss dargestellt, welches in Wirkverbindung mit dem Schloss 2 steht. In das Kupplungsgegenelement 3 greift in Figur 1 von rechts ein Vierkant 4 in das Kupplungsgegenelement 3. Das Vierkant 4 ist dabei über eine Madenschraube 5 in seiner formschlüssigen Verbindung mit dem Kupplungsgegenelement 3 gesichert. An dem Vierkant 4 ist üblicherweise ein Türbetätigungsteil form- und/oder kraftschlüssig verbunden, beispielsweise ein hier nicht dargestellter Türgriff oder Türknauf. Das Vierkant 4 dient dabei zur Drehmomentübertragung des hier nicht dargestellten Türbetätigungsteils auf das Kupplungsgegenelement 3 und darüber auf das Schloss 2. Die Drehmomentübertragung auf das Vierkant 4 und darüber auf das Kupplungsgegenelement 3 erfolgt dabei üblicherweise ohne eine vorherige Authentifizierung sondern ist vielmehr stetig ausgebildet. Das Vierkant 4 ist demnach vorzugsweise von der Innenseite einer Tür in das Kupplungsgegenelement 3 geschoben.
Das Kupplungsgegenelement 3 liegt wie in der Figur 1 dargestellt, nach links an einen Funktionsträger 6, der als Rahmen ausgebildet ist, an. An dem Funktionsträger 6 schließt sich nach links ein Türbetätigungsteil 7 in Form eines Türgriffes an. Das Türbetätigungsteil 7 ist an einem Lagerelement 8, welches hier als Buchse ausgebildet ist, und welches von der dem Türbetätigungsteil 7 abgewandten Seite des Funktionsträgers 6 in das Türbetätigungsteil 7 eingeschoben ist. Dabei ist das Lagerelement 8 durch hier nicht dargestellte Befestigungselemente drehfest mit dem Funktionsträger 6 verbunden. An dem Ende des Lagerelementes 8, welches in das Türbetätigungsteil 7 eingreift, ist zumindest ein Sicherungselement 9, hier in Form einer Rastzunge ausgestaltet, welches in eine Ringnut 10 greift, die durch die Beabstandung zweier Teile einer Presshülse 11, die in das Türbetätigungsteil 7 eingepresst ist. Bei einer Drehbewegung des Türbetätigungsteils 7 kann die durch die zwei zueinander beabstandeten Teile der Presshülse 11 gebildete Ringnut 10 mit der Drehbewegung entlang den Rastelementen 9 laufen.

Zumindest ein Teil der Einpresshülse 11 ist als Gabelschlüssel ausgestaltet, mit dem ein Führungselement 12, das in der dem Türbetätigungsteil 7 abgewandten Seite des Funktionsträgers 6 in das Lagerelement 8 geschoben ist, formschlüssig in Eingriff gelangt. Durch Einschieben des Führungselements 12 in das Lagerelement 8 werden die Rastelemente 9 nach außen gedrückt, so dass diese in der Ringnut 10 über das in das Lagerelement 8 eingeführte Führungselement 12 vor einem Ausgreifen aus der Ringnut 10 gesichert sind. An seinem dem Kupplungsgegenelement 3 zugewandten Ende des Führungselements 12 ist an dem Führungselement 12 ein Haltelement 32 ausgestaltet, das in Wirkverbindung mit einer nicht dargestellten Türdrückerhochhaltefeder steht. Dadurch wird das Türbetätigungsteil 7 über die drehfeste Verbindung mit dem Führungselement 12 in der Ausgangstellung gehalten, bzw. das Türbetätigungsteil 7 nach dessen Betätigung unterstützt durch die Türdrückerhochhaltefeder wieder zurück in die Ausgangsstellung bewegt.

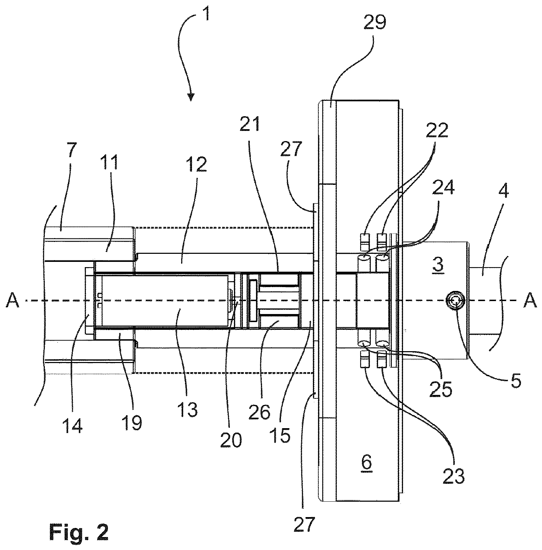

Die Lage eines Antriebselements 13, vorzugsweise eines Motors in einer Motortasche 14 und die Lage eines Kupplungselements 15, welches in dem Führungselement 12 geführt ist, und welche innerhalb des Lagerelements 8 angeordnet sind, ist in der folgenden Figur 2 dargestellt.

In dem Funktionsträger 6 ist oberhalb des durch den Funktionsträger 6 geführten Lagerelements 8 ein CPU Board 17 mit einer daran angeordneten RFID Antenne 18 in einem durch den Funktionsträger 6 ausgestalteten Funktionsbereich 31 angeordnet. Um ungehindert Signale der auf dem CPU Board 17 angeordneten Elektronik und insbesondere der Antenne 18 nach außen außerhalb des Funktionsträgers 8 übermitteln bzw. diese von außen empfangen zu können, ist der als umlaufender Rahmen ausgestaltete Funktionsträger 6 in dem Funktionsbereich 31 durch einen Schnitt 20 unterbrochen. Durch den Schnitt 20, bzw. durch die Unterbrechung des in Form eines Rahmens den Funktionsbereich 31 umlaufenden Funktionsträger 6, wird sichergestellt, dass der Funktionsträger 6 in diesem Funktionsbereich 31 nicht als Spule oder als faradayscher Käfig wirkt.

Figur 2 zeigt das System 1 aus Figur 1 in einer Ansicht von unten um die Achse A-A um 90° gedreht. An dem in der Figur 1 dargestellten Türbetätigungsteil 7, das als Türgriff ausgestaltet ist, ist an dem freien Ende des Türbetätigungsteils 7, auf das man in der Figur 1 frontal draufschaut ein Gehäusedeckel 16 ausgestaltet. Hinter dem Gehäusedeckel 16 ist eine hier nicht dargestellte Batterie in einem im Türbetätigungsteil 7 ausgestalteten Batteriefach 30 gelagert, die zur Energieversorgung des Systems 1 dient. Der Gehäusedeckel 16 und das daran angebundene Batteriefach 30 sind wie das Batteriefach einer Taschenlampe ausgestaltet. Dazu weist der Gehäusedeckel 16 ein Außengewinde auf, welches mit einem am Türbetätigungsteil 7 ausgestalteten Innengewinde form- und/oder kraftschlüssig in Eingriff gebracht wird. Wie auch bei einem Gehäusedeckel eines Batteriefachs einer Taschenlampe, gelangt dabei der Gehäusedeckel 16 mit einem Pol, einer in dem Türbetätigungsteil 7, genauer gesagt einer in dem Batteriefach 30 gehaltenen Batterie zur Anlage gelangt.

Zur besseren Darstellung der Lage des Antriebselements 13, hier in Form eines Motors, der in einer Motortasche 14 innerhalb des Führungselements 12 gelagert ist und zur besseren Darstellung der Lage des Kupplungselements 15 in dem Führungselement 12 ist nur der linke Teil der zweiteiligen Presshülse 11, die als Gabelschlüssel ausgestaltet ist, dargestellt. Zudem ist das Lagerelement 8 ausgeblendet.

Das Führungselement 12 ist an seinem dem Kupplungsgegenelement 3 abgewandten Ende, hier in der Figur links liegend, der Kontur des als Gabelschlüssel ausgebildeten Teils der zweiteiligen Distanzhülse 11 angepasst, als Vierkant 19 in einer Verjüngung ausgestaltet. In dem Abschnitt des Führungselementes 12, das innerhalb des Türbetätigungsteils 7 in das Lagerelement 8 eingeführt ist, ist in der Motortasche 14 der Motor gehalten, der vorliegend als Antriebselement 13 dient. Mit dem Motor ist eine Spindel 20 verbunden, die mit dem Motor dreht. Die Spindel 20 greift in ein Innengewinde des Kupplungselements 15. Da das Kupplungselement 15 als Vierkant ausgestaltet ist und in einer als Vierkant ausgestalteten Bohrung 21 des Führungselements 12 geführt wird, bewirkt die Drehung der Spindel 20 in Wirkverbindung mit dem Innengewinde des Kupplungselements 15, dass dieses je nach Drehrichtung des Motors 13 zum Kupplungsgegenelement 3 oder von diesem weg in dem Führungselement 12 geführt wird.

Zur Positionserfassung des Kupplungselements 15 ist das CPU Board 17 mit einem Sensor bestückt, hier vorliegend mit zwei parallel zueinander beabstandeten Lichtschranken, die jeweils aus einem IR LED 22 und einem Fototransistor 23 bestehen. Die beiden Lichtschranken sind dabei beidseitig des CPU Boards 17 angeordnet und zwar derart, dass das zwischen den Lichtschranken ausgestaltete CPU Board 17 als Schattenelement zwischen den Lichtschranken dient. Dadurch kann verhindert werden, dass das von den IR LED 22 der einen Lichtschranke ausgesendete Licht nicht von dem Fototransistor 23 der anderen auf der anderen Seite des CPU Boards 17 angeordneten Lichtschranke trifft.

In der hier in der Figur 2 dargestellten Außerkontaktstellung des Kupplungselements 15 mit dem Kupplungsgegenelement 3 befindet sich das Kupplungselement 15 innerhalb des Führungselements 8 mit seinem dem Kupplungsgegenelement 3 zugewandten Ende vor der ersten, hier in der Darstellung links liegenden Lichtschranke. Zwischen dem den Kupplungsgegenelement 3 zugewandten Ende des Kupplungselements 15 und dem Kupplungsgegenelement 3 ist der durch das Führungselement 8 dazwischenliegende Raum durchlässig für die Lichtstrahlen der Lichtschranke. Um überhaupt Licht von der einen IR LED 22 bzw. der anderen IR LED 22 auf die gegenüberliegenden Fototransistoren 23 senden zu können, sind in dem Führungselement 8 Lichteinstrahlungslöcher 24 und Lichtaustrittslöcher 25 vorgesehen. Wird beispielsweise das Kupplungselement 15 über die Spindel 20 von dem Antriebselement 13 zum Kupplungsgegenelement 3 hin angetrieben, durchläuft das Kupplungselement 15 beide Lichtschranken und unterbricht dabei die von den IR LEDs 22 ausgesendeten Lichtstrahlen, so dass diese nicht mehr von den Fototransistoren 23 erfasst werden. Wird das Kupplungselement 15 in die Kontaktstellung mit dem Kupplungsgegenelement 3 getrieben, wobei das Kupplungselement 15 soweit in das Kupplungsgegenelement 3 bewegt wird, dass eine Aussparung 26 in den Bereich der Lichtschranken gelangt. Dadurch wird der von den IR LEDs 22 ausgesendete Lichtstrahl wieder von den Fototransistoren 23 aufgenommen. Diese Signale der Lichtschranken dienen bei dem erfindungsgemäßen System 1 zur Positionserfassung des Kupplungselements 15 und insbesondere auch zur Erkennung einer Kontaktstellung des Kupplungselements 15 mit dem Kupplungsgegenelement 3. Dieses Signal der Positionserfassung oder auch ein Authentifizierungssignal kann bevorzugt über ein Lichtleiterelement 27 visualisiert werden.

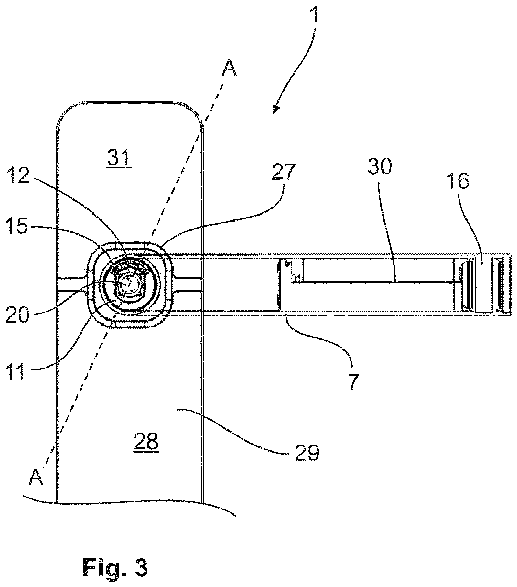

Wie in Figur 3 gezeigt, unterteilt das Lichtleiterelement 27 auf der Frontblende 29 die in dem Funktionsträger 6 ausgebildeten Funktionsbereiche 31 und 28. An dem in der Figur 3 dargestellten Türbetätigungsteil 7 ist das zuvor beschriebene Batteriefach 30, welches mit dem Deckel 16 verschlossen wird, zu erkennen. Dabei bildet der Deckel 16 einen Anlagepol für die Batterie. Das Abdeckelement 29, welches hier als Frontblende ausgestaltet ist, ist der Außenkontur des als Rahmen ausgestalteten Funktionsträger 6 angepasst. Dazu ist das Abdeckelement 29 in seinem oberen Umfang abgerundet ausgestaltet.

Das System 1 ist mit dem dargestellten Türbetätigungsteil 7 mit anderen Türbetätigungsteilen, die als einfache Drehknäufe oder als Türgriffe ausgestaltet sein können, kombinierbar. Auch ein einseitig feststehender Türknauf ist im Sinne der Erfindung mit dem Türbetätigungsteil des System 1 kombinierbar. Auch ist es denkbar, den Funktionsbereich 28 zusätzlich zu dem Türbetätigungsteil 7 mit einem Drehknauf, bzw. mit einem elektro(mecha)nischen Drehknauf zu kombinieren. Auch ist es denkbar, den Funktionsbereich 28 mit einem Schließzylinder zu bestücken. Dabei kann der Schließzylinder beispielsweise ein Profilzylinder, Rundzylinder, Ovalzylinder sein, die als Halb- und/oder Doppelzylinder ausgestaltet sind. Es ist auch denkbar, das erfindungsgemäße System 1 in einem Knaufzylinder zu verbauen, der auf dem Lagerelement 8 gelagert ist. Auch ist es denkbar, eine Authentifizierung über einen Schlüssel zu generieren, der in einem in dem Funktionsbereich 28 des Funktionsträgers angeordneten Schließzylinder eingeführt wird.

Zudem soll das System 1 nicht nur für die Montage in Türen verstanden werden. Vielmehr ist es auch denkbar, das System 1 zur Montage von Fensterbetätigungsteilen zu verwenden.

Die Erfindung beschränkt sich in ihrer Ausführung nicht auf das vorhergehend bevorzugte Ausführungsbeispiel eines Systems. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung und/oder den Zeichnungen hervorgehenden Merkmale und/oder Vorteile einschließlich konstruktiver Einzelheiten, räumliche Anordnungen und Verfahrensschritte können sowohl einzeln für sich als auch in den verschiedensten Kombinationen erfindungswesentlich sein.

### Bezugszeichenliste

- 1: System
- 2: Schloss
- 3: Kupplungsgegenelement
- 4: Vierkant
- 5: Madenschraube
- 6: Funktionsträger als Rahmen ausgebildet
- 7: Türbetätigungsteil
- 8: Lagerelement
- 9: Sicherungselement

- 10: Ringnut
- 11: zweiteilige Einpresshülse
- 12: Führungselement
- 13: Antriebselement
- 14: Motortasche
- 15: Kupplungselement
- 16: Gehäusedeckel
- 17: CPU Board
- 18: RFID Antenne

- 19: Vierkant zu 12
- 20: Spindel
- 21: Vierkantbohrung durch 8
- 22: IR LED
- 23: Fototransistor
- 24: Lichteintrittslöcher
- 25: Lichtaustrittslöcher
- 26: Aussparung in 15

- 27: Lichtleiterelement
- 28: Funktionsbereich
- 29: Abdeckelement
- 30: Batteriefach
- 31: Funktionsbereich
- 32: Halteelement zu 12

## Patentansprüche

1. System (1) zur Betätigung eines Schlosses (2), umfassend einen Funktionsträger (6), insbesondere einen Rahmen, ein Türbetätigungsteil (7), insbesondere einen Türgriff, ein mit dem Funktionsträger (6) drehfest verbundenes Lagerelement (8), das zur Lagerung des Türbetätigungsteils (7) an dem Funktionsträger (6) dient, und eine Kupplung, die zumindest ein Kupplungselement (15) umfasst, welches aus einer Außerkontaktstellung in eine Kontaktstellung mit einem Kupplungsgegenelement (3) bewegbar ist, wobei in der Außerkontaktstellung des Kupplungselements (15) mit dem Kupplungsgegenelement (3) das Türbetätigungsteil (7) ohne Übertragung eines Drehmoments auf das Schloss (2) frei drehbar ist, und wobei in Kontaktstellung des Kupplungselements (15) mit dem Kupplungsgegenelement (3) ein an dem Türbetätigungsteil (7) anliegendes Drehmoment über das Kupplungselement (15) auf das Kupplungsgegenelement (3) und darüber auf das Schloss (2) übertragbar ist, wobei das Kupplungselement (15) zumindest in der Außerkontaktstellung in dem Lagerelement (8) integriert ist
**dadurch gekennzeichnet,**
**dass** in dem Funktionsträger (6) Funktionsbereiche (28, 31) ausgebildet sind und zumindest in einem Funktionsbereich (28, 31) des Funktionsträgers (6), in dem zumindest eine Antenne angeordnet ist, der Funktionsträger (6) in seiner als umlaufender Rahmen ausgestalteten Außenkontur unterbrochen ist.

2. System (1) nach Anspruch 1,
**dadurch gekennzeichnet,**
**dass** in der Kontaktstellung des Kupplungselements (15) mitdem Kupplungsgegenelement (3) das Kupplungselement (15) zumindest abschnittsweise drehfest mit dem Kupplungsgegenelement (3) kraft- und/oder formschlüssig verbunden ist.

3. System (1) nach Anspruch 1 oder 2,
**dadurch gekennzeichnet,**
**dass** das Kupplungselement (15) ein Kupplungsstift ist, der in eine am Kupplungsgegenelement (3) ausgestaltete Kontur greift.

4. System (1) nach einem der vorhergehenden Ansprüche,
**dadurch gekennzeichnet,**
**dass** das Kupplungselement (15) über ein Antriebselement (13) antreibbar ist.

5. System (1) nach Anspruch 4,
**dadurch gekennzeichnet,**
**dass** das Antriebselement (13) ein Motor ist.

6. System (1) nach einem dervorhergehenden Ansprüche,
**dadurch gekennzeichnet,**
**dass** das Kupplungselement (15) in einem Führungselement (12) geführt ist, dass in das Lagerelement (8) einschiebbar ist.

7. System (1) nach Anspruch 6,
**dadurch gekennzeichnet,**
**dass** das Antriebselement (13) zumindest abschnittsweise in dem Führungselement (12) angeordnet ist.

8. System (1) nach Anspruch 6 oder 7,
**dadurch gekennzeichnet,**
**dass** das Führungselement (12) zumindest abschnittsweise drehfest mit dem Türbetätigungsteil (7) kraft- und/oder formschlüssig verbunden ist.

9. System (1) nach einem der Ansprüche 6 bis 8,
**dadurch gekennzeichnet,**
**dass** das Führungselement (12) in eine am Türbetätigungsteil (7) ausgestaltete Kontur greift.

10. System (1) nach einem dervorhergehenden Ansprüche,
**dadurch gekennzeichnet,**
**dass** an dem Lagerelement (8) zumindest ein Sicherungselement (9) ausgestaltet ist, das in eine im Türbetätigungsteil (7) ausgestaltete Ausnehmung greift.

11. System (1) nach Anspruch 6 und 10,
**dadurch gekennzeichnet,**
**dass** der Eingriff des Sicherungselements (9) in die Ausnehmung des Türbetätigungsteils (7) durch Einschieben des Führungselements (12) gesichert ist.

12. System (1) nach einem der vorhergehenden Ansprüche,
**dadurch gekennzeichnet,**
**dass** ein Sensor die Stellung des Kupplungselements (15), insbesondere die Kontaktstellung, die Außerkontaktstellung und eine Zwischenstellung erfasst.

13. System (1) nach Anspruch 12,
**dadurch gekennzeichnet,**
**dass** der Sensor die Stellung des Kupplungselements (15) optoelektronisch erfasst.

14. System (1) nach einem der vorhergehendenAnsprüche,
**dadurch gekennzeichnet,**
**dass** der Funktionsträger (6), insbesondere der Rahmen, seiner Außenkonturfolgend zumindest abschnittsweise abgerundet ausgestaltet ist.

15. System (1) nach einem der vorhergehenden Ansprüche,
**dadurch gekennzeichnet,**
**dass** ein Abdeckelement (29), insbesondere eine Frontblende, die der Außenkontur des Funktionsträger (6) angepasst ist, und die eine Bohrung zum Durchgreifen des Lagerelements (8) aufweist, an dem Funktionsträger (6) anordenbar ist.

16. System (1) nach Anspruch 15,
**dadurch gekennzeichnet,**
**dass** das Abdeckelement (29) die Unterteilung des Funktionsträger (6) in Funktionsbereiche (28, 31) visualisiert.

17. System (1) nach Anspruch 16,
**dadurch gekennzeichnet,**
**dass** die durch die Abdeckelement (29) visualisierten Funktionsbereiche (28, 31) durch ein Lichtleiterelement (27) voneinander getrennt sind.

18. System (1) nach Anspruch 17,
**dadurch gekennzeichnet,**
**dass** das Lichtleiterelement (27) zur optischen Signalgebung der Funktionsstellung dient.

19. System (1) nach Anspruch 5 und 6,
**dadurch gekennzeichnet,**
**dass** das als Motor ausgestaltete Antriebselement (13) in einer Motortasche (14) gelagert ist, die in das Führungselement (12) einführbar ist.

20. System (1) nach einem der Ansprüche 15 bis 18, **dadurch gekennzeichnet,**
**dass** der Funktionsträger (6) und das Abdeckelement (29) zusammen eine maximale Bauhöhe von 10 mm aufweisen.

## Claims

1. A system (1) for actuating a lock (2), comprising a functional carrier (6), in particular a frame, a door actuating part (7), in particular a door handle, a bearing element (8), which is torque-proof connected to the functional carrier (6) and serves for supporting the door actuating part (7) at the functional carrier (6), and a coupling, which comprises at least one coupling element (15), which is movable from an out-of-contact position into a contact position with a counter-coupling element (3), wherein, in the out-of-contact position of the coupling element (15) from the counter-coupling element (3), the door actuating part (7) is freely rotatable without transferring a torque moment onto the lock (2), and wherein, in contact position of the coupling element (15) with the counter-coupling element (3), a torque moment applied to the door actuating part (7) is transferable onto the counter-coupling element (3) via the coupling element (15) and thereby onto the lock (2), wherein, at least in the out-of-contact position, the coupling element (15) is incorporated into the bearing element (8),
**characterized in**
**that** functional areas (28, 31) are configured in the functional carrier (6), the functional carrier (6) is subdivided into said functional areas (28, 31), and in at least one functional area (28, 31) of the functional carrier (6), in which at least one antenna is disposed, the functional carrier (6) is interrupted in the exterior contour thereof, which is configured as a surrounding frame.

2. The system (1) according to claim 1,
**characterized in**
**that** in the contact position of the coupling element (15) with the counter-coupling element (3), the coupling element (15) is at least partially torque-proof non-positively and/or positively connected to the counter-coupling element (3).

3. The system (1) according to claim 1 or 2,
**characterized in**
**that** the coupling element (15) is a coupling pin, which engages in a contour configured at the counter-coupling element (3).

4. The system (1) according to any of the preceding claims,
**characterized in**
**that** the coupling element (15) is drivable via a drive element (13).

5. The system (1) according to claim 4,
**characterized in**
**that** the drive element (13) is a motor.

6. The system (1) according to any of the preceding claims,
**characterized in**
**that** the coupling element (15) is guided in a guiding element (12), which is slidable into the bearing element (8).

7. The system (1) according to claim 6,
**characterized in**
**that** the drive element (13) at least section-wise is disposed in the guiding element (12).

8. The system (1) according to claim 6 or 7,
**characterized in**
**that** the guiding element (12) at least section-wise is torque-proof non-positively and/or positively connected to the door actuating part (7).

9. The system (1) according to any of the claims 6 to 8,
**characterized in**
**that** the guiding element (12) engages in a contour configured at the door actuating part (7).

10. The system (1) according to any of the preceding claims,
**characterized in**
**that** at the bearing element (8), at least one securing element (9) is configured, which engages in a recess configured at the door actuating part (7).

11. The system (1) according to claim 6 and 10,
**characterized in**
**that** the engagement of the securing element (9) into the recess of the door actuating part (7) is secured by means of sliding-in the guiding element (12).

12. The system (1) according to any of the preceding claims,
**characterized in**
**that** a sensor detects the position of the coupling element (15), in particular the contact position, the out-of-contact position, and an intermediate position.

13. The system (1) according to claim 12,
**characterized in**
**that** the sensor opto-electronically detects the position of the coupling element (15).

14. The system (1) according to any of the preceding claims,
**characterized in**
**that** the functional carrier (6), in particular the frame, following the outer contour thereof, is at least section-wise configured rounded.

15. The system (1) according to any of the preceding claims,
**characterized in**
**that** a covering element (29), in particular a front faceplate, which is adapted to the outer contour of the functional carrier (6), and which includes a bore for the bearing element (8) to pass therethrough, may be disposed at the functional carrier (6).

16. The system (1) according to claim 15,
**characterized in**
**that** the covering element (29) visualizes the subdivision of the functional carrier (6) into functional areas (28, 31).

17. The system (1) according to claim 16,
**characterized in**
**that** the functional areas (28, 31) visualized by the covering element (29) are separated from each other by means of a light guide element (27).

18. The system (1) according to claim 17,
**characterized in**
**that** the light guide element (27) serves for visually signalizing the functional position.

19. The system (1) according to claim 5 and 6,
**characterized in**
**that** the drive element (13) configured as the motor is supported in a motor pocket (14), into which the guiding element (12) is introducible.

20. The system (1) according to any of the claims 15 to 18,
**characterized in**
**that** the functional carrier (6) and the covering element (29) together have a maximum construction height of 10 mm.

## Revendications

1. Système (1) pour l'actionnement d'une serrure (2), comportant un support fonctionnel (6), tout particulièrement un cadre, une part d'actionnement de porte (7), tout particulièrement une poignée de porte, un élément de logement (8), qui est connecté de façon à résister à la rotation au support fonctionnel (6) et sert au logement de la part d'actionnement de porte (7) sur le support fonctionnel (6), et un accouplement, qui comporte au moins un élément d'accouplement (15), qui est déplaçable d'une position hors contact vers une position en contact avec un contre-élément d'accouplement (3), dans la position hors contact de l'élément d'accouplement (15) avec le contre-élément d'accouplement (3), la part d'actionnement de porte (7) étant librement rotative sans transmission d'un couple de rotation vers la serrure (2), et dans la position en contact de l'élément d'accouplement (15) avec le contre-élément d'accouplement (3), un couple de rotation appliqué à la part d'actionnement de porte (7) étant transférable vers le contre-élément d'accouplement (3) via l'élément d'accouplement (15) et par-là vers la serrure (2), l'élément d'accouplement (15) étant incorporé dans l'élément de logement (8) au moins dans la position hors contact,
**caractérisé en ce**
**que** des régions fonctionnelles (28, 31) sont aménagées dans le support fonctionnel (6), le support fonctionnel (6) est subdivisé en ces régions fonctionnelles (28, 31) et au moins dans une région fonctionnelle (28, 31) du support fonctionnel (6), dans lequel au moins une antenne est agencée, le support fonctionnel (6) est interrompu dans son contour extérieur aménagé comme cadre entourant.

2. Système (1) selon la revendication 1,
**caractérisé en ce**
**que** dans la position en contact de l'élément accouplement (15) avec le contre-élément d'accouplement (3), l'élément accouplement (15) est connecté au contre-élément d'accouplement (3) par la force et/ou par la forme au moins par sections de façon à résister à la rotation.

3. Système (1) selon la revendication 1 ou 2,
**caractérisé en ce**
**que** l'élément accouplement (15) est une goupille d'accouplement, qui s'engrène dans un contour aménagé sur le contre-élément d'accouplement (3).

4. Système (1) selon l'une des revendications précédentes,
**caractérisé en ce**
**que** l'élément accouplement (15) est entraînable via un élément d'entraînement (13).

5. Système (1) selon la revendication 4,
**caractérisé en ce**
**que** l'élément d'entraînement (13) est un moteur.

6. Système (1) selon l'une des revendications précédentes,
**caractérisé en ce**
**que** l'élément accouplement (3) est guidé dans un élément de guidage (12), qui est enfichable dans l'élément de logement (8).

7. Système (1) selon la revendication 6,
**caractérisé en ce**
**que** l'élément d'entraînement (13), au moins par sections, est agencé dans l'élément de guidage (12).

8. Système (1) selon la revendication 6 ou 7,
**caractérisé en ce**
**que** l'élément de guidage (12) est connecté à la part d'actionnement de porte (7) par la force et/ou par la forme au moins par sections de façon à résister à la rotation.

9. Système (1) selon l'une des revendications 6 à 8,
**caractérisé en ce**
**que** l'élément de guidage (12) s'engrène dans un contour aménagé sur la part d'actionnement de porte (7).

10. Système (1) selon l'une des revendications précédentes,
**caractérisé en ce**
**que** sur l'élément de logement (8) est aménage au moins un élément de sécurisation (9) qui s'engrène dans un évidement aménagé dans la part d'actionnement de porte (7).

11. Système (1) selon la revendication 6 et 10,
**caractérisé en ce**
**que** l'engrènement de l'élément de sécurisation (9) dans l'évidement de la part d'actionnement de porte (7) est sécurisé par l'introduction de l'élément de guidage (12).

12. Système (1) selon l'une des revendications précédentes,
**caractérisé en ce**
**qu'**un capteur détecte la position de l'élément accouplement (15) tout particulièrement la position en contact, la position hors contact et une position intermédiaire.

13. Système (1) selon la revendication 12,
**caractérisé en ce**
**que** le capteur détecte la position de l'élément accouplement (15) de façon optoélectronique.

14. Système (1) selon l'une des revendications précédentes,
**caractérisé en ce**
**que** le support fonctionnel (6), tout particulièrement le cadre est aménagé au moins par sections de façon arrondie en suivant son contour extérieur.

15. Système (1) selon l'une des revendications précédentes,
**caractérisé en ce**
**qu'**un élément de recouvrement (29), tout particulièrement une gâche frontale, qui est adaptée au contour extérieur du support fonctionnel (6) et qui présente un perçage pour le passage de l'élément de logement (8) est agençable sur le support fonctionnel (6).

16. Système (1) selon la revendication 15,
**caractérisé en ce**
**que** l'élément de recouvrement (29) visualise la subdivision du support fonctionnel (6) en des régions fonctionnelles (28, 31).

17. Système (1) selon la revendication 16,
**caractérisé en ce**
**que** les régions fonctionnelles (28, 31) visualisées par l'élément de recouvrement (29) sont séparées les unes des autres par un élément de guidage de lumière (27).

18. Système (1) selon la revendication 17,
**caractérisé en ce**
**que** l'élément de guidage de lumière (27) sert à la signalisation visuelle de la position fonctionnelle.

19. Système (1) selon la revendication 5 et 6,
**caractérisé en ce**
**que** l'élément d'entraînement (13) aménagé comme moteur est logé dans une pochette à moteur (14), qui est enfichable dans l'élément de guidage (12).

20. Système (1) selon l'une des revendications 15 à 18,
**caractérisé en ce**
**que** le support fonctionnel (6) et l'élément de recouvrement (29) ensemble ont une hauteur de construction maximum de 10 mm.
